# EUROPÄISCHE PATENTSCHRIFT

(11) **EP 1 975 387 B1**
(45) Veröffentlichungstag und Bekanntmachung des Hinweises auf die Patenterteilung: **16.11.2011**
(21) Anmeldenummer: 08152458.9
(22) Anmeldetag: 07.03.2008
(51) Int. Cl.: F02B 37/18, F01L 3/16, F02D 9/04, F02D 9/10, F02C 9/18

(54) **Ventileinrichtung für eine Brennkraftmaschine mit einem Abgasturbolader**
Valve system for an internal combustion engine with exhaust gas turbo charger
Système de soupape pour moteur à combustion interne avec échappement comportant un turbo-compresseur

(30) Priorität: 22.03.2007 DE 102007013612
(43) Veröffentlichungstag der Anmeldung: 01.10.2008
(73) Patentinhaber: MWM GmbH, 68167 Mannheim (DE)
(72) Erfinder: Henn, Roland, 69469 Weinheim (DE)
(74) Vertreter: Thews, Gustav

(56) Entgegenhaltungen:
- EP-A- 1 426 589
- AT-B- 412 986
- DE-A1- 2 657 794
- GB-A- 2 156 043
- US-A- 3 974 806
- US-A- 5 251 874

## Beschreibung

Die Erfindung betrifft eine Ventileinrichtung für einen Abgaskanal einer Brennkraftmaschine nach dem Oberbegriff des Anspruchs 1. Eine derartige Ventileinrichtung ist aus der DE 26 57 749 A1 bekannt.

Die Erfindung betrifft ferner eine Brennkraftmaschine, insbesondere einen Gasmotor, mit einem Kurbelgehäuse, in dem eine Kurbelwelle drehbar gelagert ist, an der zumindest ein einen Kolben tragendes Pleuel angelenkt ist, wobei der Kolben in einem von einem Zylinderkopf unter Bildung eines Brennraums abgedeckten Zylinder bewegbar ist, wobei dem Brennraum Brennluft und Brennstoff zuführbar sind und Abgas entnehmbar ist, das einer Turbine eines Abgasturboladers regelbar zuführbar ist, wobei ein Bypass zur Umgehung der Turbine vorgesehen ist, der eine vorstehend beschriebene Ventileinrichtung aufweist.

Eine derartige Brennkraftmaschine ist aus der DE 10 2005 023 004 A1 bekannt. Diese Brennkraftmaschine weist einen als Waste-Gate ausgebildeten Bypass zu der Turbine des Abgasturboladers auf, wobei der Waste-Gate-Kanal ein axial bewegtes Ventil beinhaltet. Zwecks Erhöhung der Lebensdauer des Stellglieds und auch des Ventils ist in die Bypassleitung ein Drosselelement eingeordnet.

Die DE 21 47 195 beschreibt ein Verfahren zum Schützen eines Ventilschaftes eines Auslassventils einer Brennkraftmaschine gegen die durch Leckfluss von Auslassgasen verursachte Korrosion, wobei zwischen dem Ventilschaft und einer diesen umgebenden, festen Wandfläche wenigstens ein den Ventilschaft umgebender Ring aus komprimiertem, gasförmigem Strömungsmittel ausgebildet wird. Hierbei wird der Druckunterschied durch aufeinanderfolgende Einschnürungen und Erweiterungen in einem Labyrinth aufgeteilt, wobei eine Kaskade von Drücken mit Turbulenzen und damit verbundenen Druckverlusten in einem den Ventilschaft umgebenden, abgegrenzten Ringraum ausgebildet wird, wobei der Strömungsmittelring auf der Abstromseite der pneumatischen Dichtung zwischen dem Ventilteller und dem der Korrosion ausgesetzten Abschnitt des Ventilschaftes angeordnet ist.

Die Korrosion der Ventilschäfte entsteht aufgrund der Kühlung derselben und der damit verbundenen Kondensation von Schwefelanhydrid und Wasserdampf.

Aus der DE 39 33 518 A1 ist eine Brennkraftmaschine mit einem Turboladersystem und einem Membran-Stellantrieb für ein Abgas-Umgehungsventil bekannt. Das Abgas-Umgehungsventil ist als Klappenventil mit einer schwenkbaren, eine Klappe aufweisenden Welle ausgebildet. Der Membran-Stellantrieb wird mit einem Differenzdruck zwischen den Turboladern beaufschlagt und dient der Verschwenkung des Klappenventils.

Die US 5,251,874 beschreibt ein Abgasklappenventil, welches zwecks Gewährleistung der Leichtgängigkeit definierte Lagerspalte aufweist.

Die US 3,974,806 beschreibt eine Drosselklappe für einen Ansaugkanal. Zusätzlich zu dem im Ansaugkanal herrschenden Unterdruck sind Druckluftleitungen im Lagerbereich vorgesehen, die eine Kondensatbildung verhindern sollen, insbesondere im Falle einer mit einer Abgasrückführung einhergehenden, erhöhten relativen Feuchte.

Die EP 1 426 589 A2 beschreibt ein Ventil mit einem Abgaskanal nach dem Oberbegriff des Anspruchs 1.

Der Erfindung liegt die Aufgabe zugrunde, eine Ventileinrichtung bereitzustellen, die eine zuverlässige Regelung des Abgases ermöglicht, wobei insbesondere die Funktionsfähigkeit der Ventileinrichtung erhöht werden soll.

Diese Aufgabe wird durch die Merkmale des Anspruchs 1 gelöst. Dieser erfindungsgemäßen Ausgestaltung liegt zunächst einmal die Erkenntnis zugrunde, dass eine solche Ventileinrichtung thermisch durch das heiße Abgas hoch belastet ist und das Abgas Verunreinigungen, beispielsweise Partikel, mit sich führt, die sich im Bereich des Lagers bzw. der Lagerstelle der eine Welle aufweisenden Ventileinrichtung absetzen können. Dabei ist es unerheblich, ob die Welle für eine Betätigung axial oder radial bewegt wird. Durch den herrschenden Abgasdruck werden die Verunreinigungen, insbesondere die Partikel, in das Lager bzw. die Lagerstelle hineingedrückt und können zu einem Blockieren der Ventileinrichtung führen. Eine mechanische Abdichtung zur Verhinderung des Eindringens ist aufgrund der auftretenden Temperaturen nicht oder nur mit einem unverhältnismäßigen Aufwand möglich. Dadurch, dass nun das jeweilige Lager bzw. der Bereich der Lagerstelle in Richtung zu dem Abgas führenden Bereich der Ventileinrichtung mit Druckluft beaufschlagt ist, wird zunächst einmal ein Eindringen von die Verunreinigungen führendem Abgas in das Lager verhindert. Da folglich in die Lager keine Verunreinigungen eindringen, können auch keine Verunreinigungen abgelagert werden und die Verstellung der Welle beeinträchtigen. Ein weiterer positiver Effekt ist die zusätzlich erreichte Kühlung. Sie stellt zudem einen Beitrag zu einer Verringerung der ansonsten auftretenden Probleme mit Toleranzen, Verzug und unterschiedlichen Ausdehnungskoeffizienten bei. Die Verunreinigungen sind im Übrigen nicht nur bei der Verbrennung von insbesondere Gas und Luft entstandene Partikel, sondern auch zu einem wesentlichen Teil Bestandteil aus dem verbrannten Schmieröl. Wird als Brennstoff schmutzbelastetes Biogas verwendet, sind die Belastungen besonders hoch und die Lager müssen bei herkömmlicher Ausgestaltung mit erheblichen Nachlaufzeiten gründlich gesäubert werden.

Vorzugsweise ist der Ventilkörper aus einer Welle mit einer daran angeordneten Klappe gebildet und ist über die Lager drehbar in dem Ventilkörpergehäuse gelagert. Die Funktionstüchtigkeit von Drehlagern ist im Fall des Auftretens von Ablagerungen eher gewährleistet als bei Schiebelagern.

In weiterer Ausgestaltung weist die Klappe eine der Innenkontur der Ventileinrichtung bzw. des so gebildeten Abgaskanals entsprechende Form auf, wobei die Klappe entsprechend durch Drehen der Welle von einer offenen, also Durchlassstellung, in eine geschlossene Stellung verdrehbar ist. Hierbei handelt es sich dann um eine für sich bekannte Klappensteuerung, wobei die Welle bei dieser Ausbildung auf einer Seite der Ventileinrichtung in einem "Sackloch" und auf der gegenüberliegenden Seite in einem durchgehenden Lager in dem Ventilgehäuse gelagert ist. Der durch das Gehäuse der Ventileinrichtung hindurchgehende Teil der Welle weist außerhalb der Ventileinrichtung einen Betätigungshebel auf, der entsprechend von einer Stelleinrichtung betätigt wird. Dabei ist die Ventileinrichtung bevorzugt rohrförmig ausgebildet. Die Welle durchdringt die Ventileinrichtung bevorzugt mittig.

Hierbei kann es vorteilhaft sein, wenn das Lager einen im Ventilkörpergehäuse vorgesehenen Lagerkörper aufweist, in dem die Welle aufgenommen ist, wobei der Druckluftkanal in dem Lagerkörper vorgesehen ist, und wenn eine die Zufuhrmenge von Druckluft festlegende Blendeinrichtung im Druckluftkanal vorgesehen ist. Die Kanäle lassen sich beispielsweise als Bohrungen unkompliziert in die Lagerkörper einarbeiten, wobei weiterhin eine die Zufuhrmenge von Druckluft festlegende Blendeneinrichtung an geeigneter Stelle vorgesehen ist. Die Blendeneinrichtung kann durch den Durchmesser der Kanäle bzw. Bohrungen bestimmt sein, es kann aber auch vorgesehen sein, zusätzliche Blenden, Drosseln oder Ähnliches vorzusehen. Alternativ zu den Bohrungen für die Kanäle können auch vorhandene Spalte bzw. Lagerspiele zur Führung der Druckluft eingesetzt werden.

Als Alternative kann es vorteilhaft sein, wenn der Druckluftkanal in dem Ventilkörpergehäuse vorgesehen ist und zwischen dem Abgaskanal und dem Lager bzw. der Lagerstelle angeordnet ist. Somit wird ein Druckluftstrom in Richtung des Abgaskanals gewährleistet, der das Eindringen von Verunreinigungen in das Lager bzw. in den Bereich der Lagerstelle verhindert. Aufgrund der vorhandenen Druckdifferenzen wird sich parallel dazu ein Druckluftstrom in Richtung der Lager einstellen, der die Lager teilweise durchströmt. Die Abschottung der Lager ist somit gewährleistet. Die Kanäle lassen sich hierbei auch als Bohrungen unkompliziert in das Ventilkörpergehäuse einarbeiten, wobei weiterhin eine die Zufuhrmenge von Druckluft festlegende Blendeneinrichtung an geeigneter Stelle vorgesehen sein kann.

Zusätzlich kann es vorteilhaft sein, wenn der Druckluftkanal mit Druckluft aus dem Druckluftsystem, insbesondere dem Ladeluftsystem der Brennkraftmaschine beaufschlagbar ist. Diese Ausführung stellt eine besonders vorteilhafte Ausgestaltung dar, da hierzu keine zusätzlichen Pumpen oder Ähnliches benötigt werden. Sind an der Brennkraftmaschine Druckluftpumpen vorgesehen oder steht bei einer stationär verwendeten Brennkraftmaschine externe Druckluft zur Verfügung, kann natürlich im Rahmen der Erfindung auch auf solcherart bereitgestellte Druckluft zurückgegriffen werden.

Weitere vorteilhafte Ausgestaltungen der Erfindung sind der Zeichnungsbeschreibung zu entnehmen, in der ein in der Figur dargestelltes Ausführungsbeispiel näher beschrieben ist.

In den beiden Figuren ist ein Querschnitt durch eine erfindungsgemäß ausgestaltete Ventileinrichtung im Prinzip dargestellt.

Eine Ventileinrichtung 1 weist ein rohrförmig ausgebildetes Ventilkörpergehäuse 1.1 auf, das zumindest einen Teil eines Abgaskanals 11 bildet, in dem ein aus einer Welle 2 und einer Klappe 9 gebildeter Ventilkörper 1.2 über zwei Lager 3a, 3b gelagert ist. Die Welle 2 ist in den beiden zwei gegenüberliegende Lagerstellen 3a, 3b bildenden Lagern mittig im Ventilkörpergehäuse 1.1 gelagert. Dabei weist das Lager 3a einen Lagerkörper 4a auf, in den ein Sackloch 5 eingearbeitet ist. Die Lagerkörper 4a, 4b sind jeweils vorteilhaft über eine Schraubverbindung mit dem Ventilkörpergehäuse 1.1 der Ventileinrichtung 1 verschraubt. Die Welle 2 ist mit einem von einer Druckfeder 6 druckbeaufschlagten Endbereich in dem Sackloch 5 des Lagerkörpers 4a drehbar gelagert.

Auf der gegenüberliegenden Seite weist der Lagerkörper 4b des Lagers 3b eine durchgehende Bohrung 7 auf, durch die die Welle 2 hindurchragt. Dabei ist an dem hinausragenden Teil der Welle 2 eine nicht dargestellte Verstelleinrichtung befestigt.

Die Welle 2 weist weiterhin eine ringflanschförmige Abstützscheibe 8 auf, die sich gegen den Lagerkörper 4b, hervorgerufen durch die von der Druckfeder 6 auf die Welle 2 ausgeübte Druckkraft, abstützt. Innerhalb der Ventileinrichtung 1 ist eine Klappe 9 an der Welle 2 bevorzugt lösbar befestigt. Die Klappe 9 kann durch Drehen der Welle 2 von der dargestellten offenen Position in eine geschlossene Position verstellt werden.

Zwecks Verhinderung, dass mit dem Abgas mitgeführte Schmutzpartikel in die Lager 3a, 3b bzw. die Lagerkörper 4a, 4b eindringen, sind die Lager 3a, 3b bzw. die Lagerkörper 4a, 4b in Richtung zu dem Abgas führenden Innenbereich der Ventileinrichtung 1 druckluftbeaufschlagt.

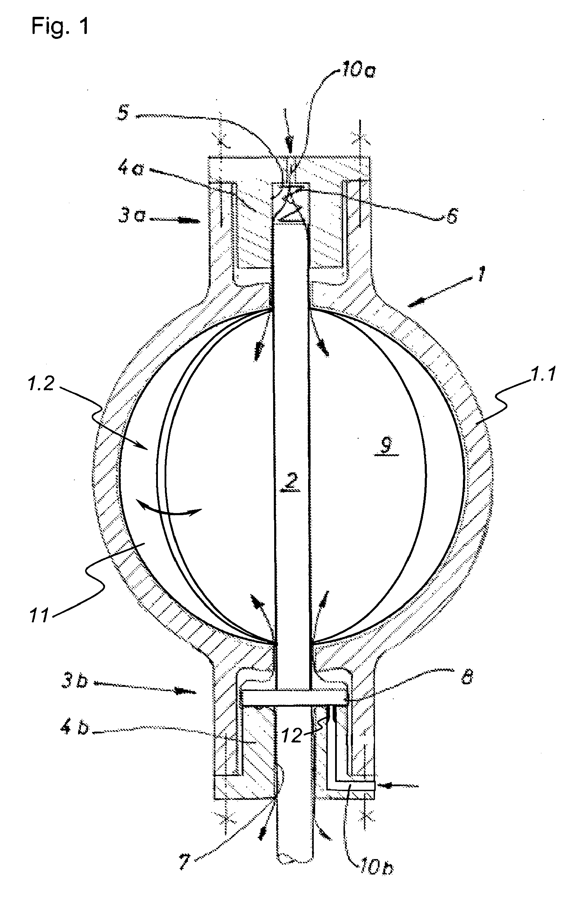

Dabei wird gemäß Figur 1 die Druckluft über Kanäle 10a, 10b dem Lagerkörper 4a, 4b zugeführt und gelangt gemäß den dargestellten Pfeilen in den Abgas führenden Bereich der Ventileinrichtung 1 bzw. in den Abgaskanal 11. Die Druckluft strömt durch die mit Spiel behafteten Teile des Lagers 3a. Hierdurch wird neben der Abschottung auch eine Kühlung des Lagers 3a gewährleistet.

Im Bereich des Lagerkörpers 4b kann auch ein Teilstrom nach außen in die Umgebung abgeführt werden. Die zugeführte Druckluft weist einen Druck auf, der zumindest geringfügig höher ist als der Abgasdruck. Durch den Durchmesser der Kanäle 10a, 10b bzw. einer im Kanal 10b vorgesehenen Blendeinrichtungen 12 bzw. Drossel wird die zugeführte Menge der Druckluft mitbestimmt.

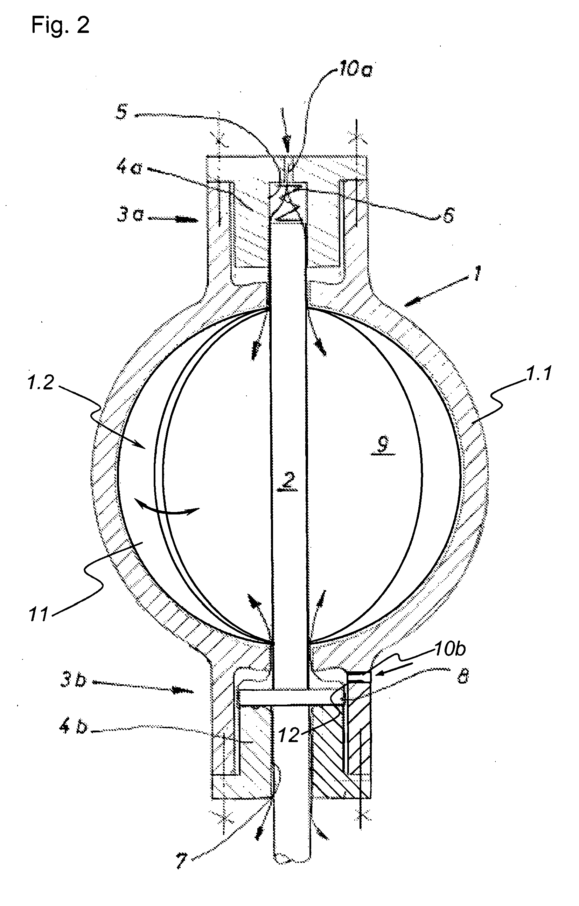

Gemäß Figur 2 ist der Kanal 10b im Ventilkörpergehäuse 1.1 angeordnet. Die Druckluft wird zwischen dem Abgaskanal 11 und der Lagerstelle des Lagers 3b eingebracht. Von dort aus strömt die Druckluft zum einen in den Abgaskanal 11 und verhindert somit das Eindringen von Verschmutzungen. Zum anderen strömt die Druckluft durch die mit Spiel behafteten Teile des Lagers 3b nach außen. Hierdurch wird eine Kühlung des Lagers 3b gewährleistet.

### Bezugszeichen

- 1: Ventileinrichtung
- 1.1: Ventilkörpergehäuse
- 1.2: Ventilkörper
- 2: Welle
- 3a: Lager, Lagerstelle
- 3b: Lager, Lagerstelle
- 4a: Lagerkörper
- 4b: Lagerkörper
- 5: Sackloch
- 6: Druckfeder
- 7: Bohrung
- 8: Abstützscheibe
- 9: Klappe
- 10a: Kanal
- 10b: Kanal
- 11: Abgaskanal
- 12: Blendeinrichtung

## Patentansprüche

1. Ventileinrichtung (1) für einen als Bypass zur Umgehung der Turbine eines Abgasturboladers ausgebildeten Abgaskanals (11) einer Brennkraftmaschine, aufweisend ein rohrförmig ausgebildetes Ventilkörpergehäuse (1.1), das zumindest ein Teil des Abgaskanals (11) bildet mit einem Ventilkörper (1.2) und Lagern (3a, 3b), wobei der Ventilkörper (1.2) über die Lager (3a, 3b) in dem Ventilkörpergehäuse (1.1) gelagert ist, wobei im Bereich des Lagers (3a, 3b) ein Druckluftkanal (10a, 10b) vorgesehen ist, über den Druckluft in das Lager (3a, 3b) und in den Abgaskanal (11) bringbar ist,
**dadurch gekennzeichnet, dass** der Ventilkörper (1.2) aus einer Welle (2) mit einer daran angeordneten Klappe (9) gebildet ist und über die Lager (3a, 3b) drehbar in dem Ventilkörpergehäuse (1.1) gelagert ist, wobei die Lager (3a, 3b) jeweils einen im Ventilkörpergehäuse (1.1) vorgesehenen Lagerkörper (4a, 4b) aufweisen, in dem die Welle (2) aufgenommen ist, wobei der Druckluftkanal (10a, 10b)
in dem Lagerkörper (4a, 4b) oder
in dem Ventilkörpergehäuse (1.1) zwischen dem Lagerkörper (4a, 4b) und dem Abgaskanal (11) vorgesehen ist.

2. Ventileinrichtung (1) nach Anspruch 1,
***dadurch gekennzeichnet, dass*** der Druckluftkanal (10b) in dem Ventilkörpergehäuse (1.1) vorgesehen ist und zwischen dem Abgaskanal (11) und dem Lager (3b) angeordnet ist.

3. Ventileinrichtung (1) nach einem der vorherigen Ansprüche,
***dadurch gekennzeichnet, dass*** eine die Zufuhrmenge von Druckluft festlegende Blendeinrichtung (12) im Druckluftkanal (10a, 10b) vorgesehen ist.

4. Brennkraftmaschine, insbesondere ein Gasmotor, mit einem Kurbelgehäuse, in dem ein Kurbelwelle drehbar gelagert ist, an der zumindest ein einen Kolben tragendes Pleuel angelenkt ist, wobei der Kolben in einem von einem Zylinderkopf unter Bildung eines Brennraums abgedeckten Zylinder bewegbar ist, wobei dem Brennraum Brennluft und Brennstoff zuführbar sind und Abgas entnehmbar ist, das einer Turbine eines Abgasturboladers regelbar zuführbar ist, wobei ein Bypass zur Umgehung der Turbine vorgesehen ist, der eine Ventileinrichtung nach einem der vorherigen Ansprüche aufweist.

5. Brennkraftmaschine nach Anspruch 4,
***dadurch gekennzeichnet, dass*** der Druckluftkanal (10a, 10b) mit Druckluft aus dem Druckluftsystem, insbesondere dem Ladeluftsystem der Brennkraftmaschine beaufschlagbar ist.

## Claims

1. Valve unit (1) for an exhaust gas duct (11) of an internal combustion engine, said exhaust duct being designed as a bypass for bypassing the turbine of an exhaust gas turbocharger, comprising a tube-shaped valve body chamber (1.1) forming at least part of the exhaust gas duct (11), with a valve body (1.2) and bearings (3a, 3b), wherein the valve body (1.2) is supported in the valve body chamber (1.1) via the bearings (3a, 3b), wherein in the region of the bearing (3a, 3b) a compressed-air duct (10a, 10b) is provided via which compressed air can be brought into the bearing (3a, 3b) and into the exhaust gas duct (11),
**characterized in that** the valve body (1.2) is formed by a shaft (2) having a flap (9) arranged thereon and is rotatably supported in the valve body chamber (1.1) via the bearings (3a, 3b), wherein the bearings (3a, 3b) each comprise a bearing body (4a, 4b) provided in the valve body chamber (1.1), in which bearing body the shaft (2) is accommodated, wherein the compressed-air duct (10a, 10b) is provided in the bearing body (4a, 4b) or in the valve body chamber (1.1) between the bearing body (4a, 4b) and the exhaust gas duct (11).

2. Valve unit (1) according to claim 1,
**characterized in that** the compressed-air duct (10b) is provided in the valve body chamber (1.1) and arranged between the exhaust gas duct (11) and the bearing (3b).

3. Valve unit (1) according to any one of the preceding claims,
**characterized in that** a flow-regulating arrangement (12) is provided in the compressed-air duct (10a, 10) determining the amount of compressed air supplied.

4. Internal combustion engine, in particular a gas engine, with a crankcase in which a crankshaft is rotatably supported, on which crankshaft at least one connecting rod carrying a piston is articulated, wherein the piston can be moved in a cylinder covered by a cylinder head so as to form a combustion space, wherein combustion air and fuel can be supplied to the combustion space and exhaust gas can be extracted therefrom, which exhaust gas can be supplied to a turbine of an exhaust gas turbocharger in a manner so as to be able to be controlled, wherein a bypass is provided for bypassing the turbine, said bypass comprising a valve unit according to any one of the preceding claims.

5. Internal combustion engine according to claim 4,
**characterized in that** the compressed-air duct (10a, 10b) can be pressurized with compressed air from the compressed-air system, in particular the charge air system of the internal combustion engine.

## Revendications

1. Equipement de soupape (1) pour un conduit de gaz d'échappement (11) d'un moteur à combustion interne constitué en tant que dérivation pour le contournement de la turbine d'un turbocompresseur à gaz d'échappement, présentant un carter de corps de soupape (1.1) constitué de façon tubulaire qui forme au moins une partie du conduit de gaz d'échappement (11) avec un corps de soupape (1.2) et des paliers (3a, 3b), le corps de soupape (1.2) étant supporté via les paliers (3a, 3b) dans le carter de corps de soupape (1.1), un conduit d'air comprimé (10a, 10b) étant prévu dans la zone du palier (3a, 3b) et par le biais duquel de l'air comprimé peut être acheminé dans le palier (3a, 3b) et dans le conduit de gaz d'échappement (11), **caractérisé en ce que** le corps de soupape (1.2) est formé d'un arbre (2) avec un volet (9) qui lui est raccordé et est supporté en rotation dans le carter de corps de soupape (1.1) via les paliers (3a, 3b), les paliers (3a, 3b) présentant respectivement un corps de palier (4a, 4b), prévu dans le carter de corps de soupape (1.1), dans lequel l'arbre (2) est logé, le conduit d'air comprimé (10a, 10b) étant prévu dans le corps de palier (4a, 4b) ou dans le carter de corps de soupape (1.1) entre le corps de palier (4a, 4b) et le conduit de gaz d'échappement (11).

2. Equipement de soupape (1) selon la revendication 1,
**caractérisé en ce que** le conduit d'air comprimé (10b) est prévu dans le carter de corps de soupape (1.1) et est disposé entre le conduit de gaz d'échappement (11) et le palier (3b).

3. Equipement de soupape (1) selon une des revendications précédentes,
**caractérisé en ce qu'**il est prévu dans le conduit d'air comprimé (10a, 10b) un équipement d'obturation (12) déterminant la quantité d'amenée d'air comprimé.

4. Moteur à combustion interne, en particulier un moteur à gaz, avec un carter-moteur dans lequel est supporté en rotation un vilebrequin sur lequel est articulée au moins une bielle portant un piston, le piston étant mobile dans un cylindre couvert d'une culasse de cylindre avec formation d'une chambre de combustion, de l'air de combustion et du carburant pouvant être acheminés vers la chambre de combustion et des gaz d'échappement pouvant être prélevés à partir de la chambre de combustion et être acheminés de façon réglable à une turbine d'un turbocompresseur à gaz d'échappement, une dérivation de contournement de la turbine étant prévue qui présente un équipement de soupape selon une des revendications précédentes.

5. Moteur à combustion interne selon la revendication 4,
**caractérisé en ce que** le conduit d'air comprimé (10a, 10b) peut être alimenté en air comprimé en provenance du système d'air comprimé, en particulier du système d'air de suralimentation du moteur à combustion interne.
